# EUROPÄISCHE PATENTSCHRIFT

(11) **EP 0 512 230 B1**
(45) Veröffentlichungstag und Bekanntmachung des Hinweises auf die Patenterteilung: **17.08.1994**
(21) Anmeldenummer: 92104962.3
(22) Anmeldetag: 23.03.1992
(51) Int. Cl.: B23B 31/16

(54) **Wechseleinrichtung für Drehfutter-Spannbacken**
Changing device for lathe chuck clamping jaws
Dispositif interchangeable pour mâchoirs de serrage de mandrin de tour

(30) Priorität: 10.05.1991 DE 4115277
(43) Veröffentlichungstag der Anmeldung: 11.11.1992
(73) Patentinhaber: Röhm, Günter Horst, D-89567 Sontheim (DE)
(72) Erfinder: Pesch, Karl, W-8880 Dillingen (DE)
(74) Vertreter: Fay, Hermann, Dipl.-Phys. Dr.

(56) Entgegenhaltungen:
- EP-A- 0 011 080
- DE-C- 1 288 872

## Beschreibung

Die Erfindung betrifft eine Wechseleinrichtung für Drehfutter-Spannbacken aus je einer Grundbacke und einer daran auswechselbar angeschlossenen Aufsatzbacke, wobei die Grundbacke und die Aufsatzbacke mittels einer Spannschraube über eine Spitzverzahnung formschlüssig miteinander verbunden sind und einander zugewandte radiale Nuten aufweisen, von welchen die Nut an der Grundbacke als T-Nut für die Aufnahme eines Nutsteins ausgebildet ist, der in der T-Nut in Richtung gegen die Aufsatzbacke abgestützt ist und zur tangentialen Positionierung der Aufsatzbacke in deren Nut eingreift. - Die Angaben radial, tangential und axial beziehen sich hier wie im folgenden ausnahmslos auf die Drehfutterachse.

Bei beispielsweise aus der deutschen Auslegeschrift 12 88 872 bekannten Einrichtungen dieser Art sind mehrere Spannschrauben in axialer Anordnung radial nebeneinander vorgesehen, die die Aufsatzbacke durchgreifen und über die Spitzverzahnung direkt gegen den Nutstein verspannen. Beim Wechseln der Aufsatzbacken erfordert dies die Betätigung von jeweils allen, in der Regel zu zweit je Aufsatzbacke vorgesehenen Spannschrauben. Das ist zeitaufwendig. Auch können die in den Aufsatzbacken für die Spannschrauben erforderlichen Bohrungen die Möglichkeiten für die Ausbildung von Werkstückspannflächen an den Aufsatzbacken beschränken.

Der Erfindung liegt die Aufgabe zugrunde, eine Wechseleinrichtung der eingangs genannten Art so auszubilden, daß der Backenwechsel sehr schnell ausgeführt werden kann, dennoch die Verbindung beider Backen fest, genau und sicher bleibt.

Diese Aufgabe wird nach der Erfindung dadurch gelöst, daß die Aufsatzbacke einen in die T-Nut vorstehenden Anker aufweist, der einen sich in Radialrichtung beidseits mit je einer Keilfläche erweiternden Ankerkopf besitzt, wobei sich die beiden Keilflächen mit ihren gedachten Verlängerungen auf der Seite der Aufsatzbacke schneiden, daß der Nutstein doppelt, nämlich je einer an beiden Keilflächen des Ankerkopfes vorgesehen ist, wobei die Nutsteine den Keilflächen mit entsprechenden Schrägflächen anliegen, und daß die Spannschraube in radialer Anordnung den Ankerkopf in einer Bohrung durchsetzt und die Nutsteine über den Ankerkopf gegeneinander verspannt.

Durch Drehen der Spannschraube im Befestigungssinn wird der Anker durch die Nutsteine über die Keilflächen axial entgegen gesetzt zur Aufsatzbacke gedrückt und dadurch die Aufsatzbacke mit der Grundbacke axial in der Spitzverzahnung verspannt. Beim Verdrehen der Spannschraube im entgegen gesetzten Drehsinn vergrößern die Nutsteine ihren radialen Abstand voneinander und geben dadurch den Anker frei, bis die Aufsatzbacke über die Spitzverzahnung axial von der Grundbacke abgehoben und entweder auf der Grundbacke innerhalb der Teilung der Spitzverzahnung versetzt oder gänzlich, einschließlich des Ankers, der beiden Nutsteine und der Spannschraube, gewechselt werden kann. Die tangentiale Positionierung der Aufsatzbacke an der Grundbacke erfolgt durch beide Nutsteine radial beidseits des Ankers. Im Ergebnis wird durch die Erfindung erreicht, daß beim Wechseln oder Versetzen der Aufsatzbacken nur jeweils noch eine Spannschraube betätigt werden muß, was vorteilhaft kurze Umrüstzeiten ergibt. Trotzdem ist der Sitz der beiden Backen aneinander durch die Keilverspannung des Ankers sehr fest und sicher, und durch die Nutsteine radial beidseits des Ankers auch sehr genau. Die Spannschraube ist durch ihre radiale Anordnung zur Betätigung gut zugänglich. Da in den Aufsatzbacken axiale Bohrungen für die Spannschrauben entfallen, unterliegt die Ausbildung der Werkstückspannflächen an den Aufsatzbacken keinen Beschränkungen, so daß der Ausnutzungsgrad der Aufsatzbacken sehr hoch ist, was besonders bei ungehärteten Aufsatzbacken von Vorteil ist. Ein weiterer Vorteil der Erfindung ist auch darin zu sehen, daß die T-Nut eine Ausbildung behält, die auch weiterhin die Befestigung herkömmlicher Aufsatzbacken an der Grundbacke ermöglicht.

Die Spannschraube kann aus einer genormten Schraube nach DIN 912 bestehen, die mit ihrem Schaft den radial äußeren Nutstein und den Ankerkopf ohne Gewindeeingriff durchsetzt und mit ihrem Gewinde nur am radial inneren Nutstein im Eingriff steht. Besser aber und im Rahmen der Erfindung daher bevorzugt ist eine Ausführungsform, bei der die Spannmutter mit beiden Nutsteinen in Spanngewinden von jeweils entgegengesetztem Gewindesinn im Eingriff steht. Das bringt den Vorteil, daß beim Verdrehen der Spannschraube im Sinne des Lösens beide Nutsteine radial auseinander gedrückt werden und damit den Ankerkopf zuverlässig freigeben. In jedem Fall ist die die Spannschraube aufnehmende Bohrung im Ankerkopf von im Vergleich zur Spannschraube so großem Querschnitt, daß das für das Spannen und Lösen erforderliche axiale Bewegungsspiel des Ankerkopfes gegenüber der Spannschraube gewährleistet ist. Weiter ist die Anordnung vorzugsweise so getroffen, daß der Anker zur Befestigung an der Aufsatzbacke einen Gewindezapfen aufweist, mit dem der Anker in ein Muttergewinde eingedreht ist, das in einer Sackbohrung in der Aufsatzbacke ausgebildet ist. Die Verbindung zwischen dem Anker und der Aufsatzbacke braucht dabei nicht besonders verdrehungsfest zu sein, weil die radial beidseits des Gewindezapfens in die Nut der Aufsatzbacke eingreifenden Nutsteine die Aufsatzbacke gegen Verdrehen an der Grundbacke zuverlässig sichern. Im übrigen hat diese Nut keine weitere Haltefunktion für die Aufsatzbacke zu erfüllen, so daß der Nutquerschnitt vorteilhaft flach ausgebildet werden kann, was ebenfalls für den schon erwähnten Ausnutzungsgrad der Aufsatzbacken bezüglich Anordnung und Ausbildung der Werkstückspannflächen sehr günstig ist.

Im folgenden wird die Erfindung an einem in der Zeichnung dargestellten Ausführungsbeispiel näher erläutert; es zeigen:
- Fig. 1: Grund- und Aufsatzbacke eines im übrigen nicht dargestellten Drehfutters in einem durch die Achse des Drehfutters gehenden Schnitt,
- Fig. 2: eine radiale Draufsicht auf den Gegenstand der Fig. 1 in Richtung des dort eingetragenen Pfeiles II,

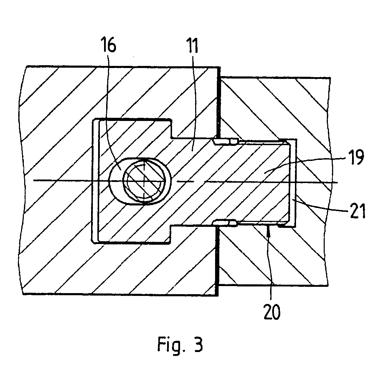

- Fig. 3: den Schnitt in Richtung III - III in Fig. 1.

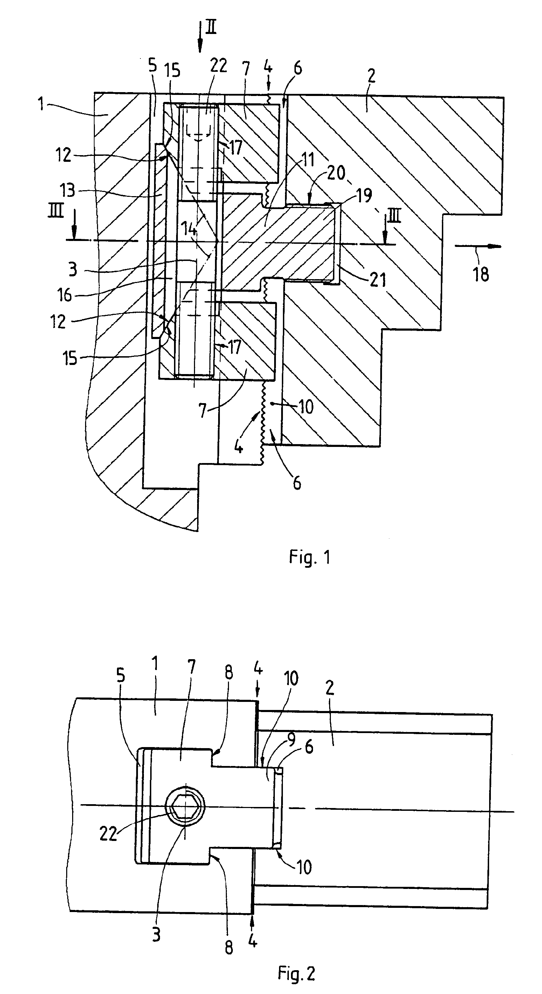

In der Zeichnung ist die Grundbacke mit 1 und die daran auswechselbar angeschlossene Aufsatzbacke mit 2 bezeichnet. Die Grundbacke 1 und die Aufsatzbacke 2 sind mittels einer Spannschraube 3 über eine Spitzverzahnung 4 formschlüssig miteinander verbunden. Sie besitzen außerdem einander zugewandte radiale Nuten 5, 6, von welchen die Nut 5 an der Grundbacke 1 als T-Nut für die Aufnahme von zwei Nutsteinen 7 ausgebildet ist, die in der T-Nut an deren tangentialen Wandteilen 8 in axialer Richtung gegen die Aufsatzbacke 2 hin abgestützt sind und mit ihrem axial vorderen, zur Aufsatzbacke gerichteten Ende 9 zwecks tangentialer Positionierung der Aufsatzbacke 2 in deren Nut 6 eingreifen, wobei sich die Nutsteine 7 an den beiden Seitenwänden 10 dieser Nut 6 tangential abstützen. Die Aufsatzbacke 2 trägt einen in die T-Nut 5 vorstehenden Anker 11, der einen sich in Radialrichtung beidseits mit je einer Keilfläche 12 erweiternden Ankerkopf 13 besitzt. Die gegenseitige Neigung dieser beiden Keilflächen 12 ist so, daß sich die Keilflächen mit ihren gedachten, in Fig. 1 bei 14 strichpunktiert angedeuteten Verlängerungen auf der Seite der Aufsatzbacke 2 schneiden. An den beiden Keilflächen 12 des Ankerkopfes 13 liegt je einer der beiden Nutsteine 7 mit entsprechender Schrägfläche 15 an. Die Spannschraube 3 durchsetzt in radialer Anordnung den Ankerkopf 13 in einer Bohrung 16 und verspannt beim Anziehen die Nutsteine 7 über den Ankerkopf 13 gegeneinander, so daß der Anker 11 in Fig. 1 nach links und damit die Aufsatzbacke 2 in der Spitzverzahnung 4 gegen die Grundbacke 1 gezogen wird. Die Spannschraube 3 steht mit beiden Nutsteinen 7 in Spanngewinden 17 von jeweils entgegengesetztem Gewindesinn im Eingriff. Der Querschnitt der Bohrung 16 im Ankerkopf 13 ist gegenüber dem der Spannschraube 3 so groß, daß der Ankerkopf ein axiales Bewegungsspiel gegenüber der Spannschraube 3 besitzt, dessen Größe mindestens gleich der Eingriffstiefe der Spitzverzahnung 4 ist. Beim Verdrehen der Spannschraube 3 im Sinne eines Lösens werden die beiden Nutsteine 7 radial so weit auseinander gedrückt, daß der Anker 11 um die Eingriffstiefe der Spitzverzahnung 4 in Fig. 1 nach rechts bewegt und dadurch die Aufsatzbacke 2 aus der Spitzverzahnung 4 an der Grundbacke 1 axial in Richtung des Pfeiles 18 herausgehoben und entweder in radialer Richtung an der Grundbacke 1 versetzt oder insgesamt mit dem Anker 11, den Nutsteinen 7 und der Spannschraube 3 ausgewechselt werden kann. Der Anker 11 besitzt zur Befestigung an der Aufsatzbacke 2 einen Gewindezapfen 19, mit dem der Anker 11 in ein Muttergewinde 20 eingedreht ist, das in einer Sackbohrung 21 in der Aufsatzbacke 2 ausgebildet ist. Der Gewindezapfen 19 befindet sich daher radial zwischen den beiden Nutsteinen 7, so daß die Nutsteine 7 durch ihren Eingriff in die Nut 6 die Aufsatzbacke 2 gegen Verdrehen um den Gewindezapfen 19 sichern. Die Spannschraube 3 ist zu ihrer Betätigung mit einem Innensechskant 22 ausgestattet.

## Patentansprüche

1. Wechseleinrichtung für Drehfutter-Spannbacken aus je einer Grundbacke (1) und einer daran auswechselbar angeschlossenen Aufsatzbacke (2), wobei die Grundbacke (1) und die Aufsatzbacke (2) mittels einer Spannschraube (3) über eine Spitzverzahnung (4) formschlüssig miteinander verbunden sind und einander zugewandte Nuten (5, 6) aufweisen, von welchen die Nut an der Grundbacke als T-Nut (5) für die Aufnahme eines Nutsteins (7) ausgebildet ist, der in der T-Nut (5) in Richtung gegen die Aufsatzbacke (2) abgestützt ist und zur tangentialen Positionierung der Aufsatzbacke (2) in deren Nut (6) eingreift, dadurch gekennzeichnet, daß die Aufsatzbacke (2) einen in die T-Nut (5) vorstehenden Anker (11) aufweist, der einen sich in Radialrichtung beidseits mit je einer Keilfläche (12) erweiternden Ankerkopf (13) besitzt, wobei sich die beiden Keilflächen (12) mit ihren gedachten Verlängerungen (14) auf der Seite der Aufsatzbacke (2) schneiden, daß der Nutstein (7) doppelt, nämlich je einer an beiden Keilflächen (12) des Ankerkopfes (13) vorgesehen ist, wobei die Nutsteine (7) den Keilflächen (12) mit entsprechenden Schrägflächen (15) anliegen, und daß die Spannschraube (3) in radialer Anordnung den Ankerkopf (13) in einer Bohrung (16) durchsetzt und die Nutsteine (7) über den Ankerkopf (13) gegeneinander verspannt.

2. Einrichtung nach Anspruch 1, dadurch gekennzeichnet, daß die Spannmutter (3) mit beiden Nutsteinen (7) in Spanngewinden (17) von jeweils entgegengesetztem Gewindesinn im Eingriff steht.

3. Einrichtung nach Anspruch 1 oder 2, dadurch gekennzeichnet, daß der Anker (11) zur Befestigung an der Aufsatzbacke (2) einen Gewindezapfen (19) aufweist, mit dem der Anker (11) in ein Muttergewinde (20) eingedreht ist, das in einer Sackbohrung (21) in der Aufsatzbacke (2) ausgebildet ist.

## Claims

1. A change arrangement for rotary chuck clamping jaws each comprising a main jaw (1) and an attachment jaw (2) which is interchangeably connected thereto, wherein the main jaw (1) and the attachment jaw (2) are positively lockingly connected together by way of a pointed-tooth configuration (4) by means of a clamping screw (3) and have mutually facing grooves (5, 6) of which the groove on the main jaw is in the form of a T-shaped groove (5) for accommodating a sliding member (7) which is supported in the T-shaped groove (5) in a direction towards the attachment jaw (2) and which engages into the groove (6) thereof for tangential positioning of the attachment jaw (2), characterised in that the attachment jaw (2) has an anchor (11) which projects into the T-shaped groove (5) and which has an anchor head (13) which is enlarged in a radial direction on both sides with a respective wedge surface (12), wherein the two wedge surfaces (12) intersect with their notional extensions (14) on the side of the attachment jaw (2), that the sliding member (7) is provided duplicated, namely a respective one at both wedge surfaces (12) of the anchor head (13), the sliding members (7) bearing against the wedge surfaces (12) with corresponding inclined surfaces (15), and that the clamping screw (3) passes in a radial arrangement through the anchor head (13) in a bore (16) and braces the sliding members (7) towards each other by way of the anchor head (13).

2. An arrangement according to claim 1 characterised in that the clamping nut (3) is in engagement with both sliding members (7) in clamping screwthreads (17) of respectively opposite screwthread hand.

3. An arrangement according to claim 1 or claim 2 characterised in that for fixing to the attachment jaw (2) the anchor (11) has a screwthreaded projection (19) with which the anchor (11) is screwed into a female screwthread (20) provided in a blind bore (21) in the attachment jaw (2).

## Revendications

1. Dispositif changeur pour des mâchoires de serrage de mandrin rotatif, constituées chacune par une mâchoire de base (1) et une mâchoire rapportée (2) raccordée à la mâchoire de base de manière à être interchangeable, dans lequel la mâchoire de base (1) et la mâchoire rapportée (2) sont reliées entre elles selon une liaison par formes complémentaires au moyen d'une vis de serrage (3) par l'intermédiaire d'une denture à pointes (4), et des rainures (5, 6) tournées l'une vers l'autre, parmi lesquelles la rainure ménagée dans la mâchoire de base est réalisée sous la forme d'une rainure en T (5) destinée à loger un bloc de rainure (7), qui est soutenu, dans la rainure en T (5), en direction de la mâchoire rapportée (2) et s'engage, pour le positionnement tangentiel de la mâchoire rapportée (2), dans la rainure (6) de cette mâchoire, caractérisé en ce que la mâchoire rapportée (2) possède un élément d'ancrage (11) qui pénètre dans la rainure en T (5) et qui possède une tête d'ancrage (13) qui s'élargit dans les deux côtés dans la direction radiale avec des surfaces en coin respectives (12), les deux surfaces en coin (12) se recoupant, par leurs prolongements imaginaires (14), du côté de la mâchoire rapportée (2), que le bloc de rainure (7) est prévu en double, c'est-à-dire qu'un bloc de rainure est prévu pour chacune des deux surfaces en coin (12) de la tête d'ancrage (13), les blocs de rainure (7) s'appliquant contre les surfaces en coin (12) au moyen de surfaces obliques correspondantes (15), et que la vis de serrage (3) traverse radialement un perçage (16) ménagé dans la tête d'ancrage (13) et serre l'un contre l'autre les blocs de rainure (7) par l'intermédiaire de la tête d'ancrage (13).

2. Dispositif selon la revendication 1, caractérisé en ce que l'écrou de serrage (3) engrène avec les deux blocs de rainure (7) dans des taraudages de serrage (17) tournant en des sens réciproquement opposés.

3. Dispositif selon la revendication 1 ou 2, caractérisé en ce que l'élément d'ancrage (11) possède, pour sa fixation à la mâchoire rapportée (2), un embout fileté (19), au moyen duquel l'élément d'ancrage (11) est vissé dans un taraudage récepteur (20) qui est ménagé dans un trou borgne (21) ménagé dans la mâchoire rapportée (2).
